# EUROPEAN PATENT SPECIFICATION

(11) **EP 2 192 037 B1**
(45) Date of publication and mention of the grant of the patent: **08.08.2012**
(21) Application number: 08425767.4
(22) Date of filing: 01.12.2008
(51) Int. Cl.: B62K 11/14, B62K 21/26, B62K 23/02, F02D 11/02, F02D 11/10

(54) **Throttle control integrating an angular position sensor**
Drosselklappensteuerung mit einem Winkelpositionssensor
Commande de manette intégrant un capteur de position angulaire

(43) Date of publication of application: 02.06.2010
(73) Proprietor: Magneti Marelli S.p.A., Corbetta (MI) (IT)
(72) Inventor: Cominetti, Paolo, 40137 Bologna (IT); Baldassari, Andrea, 40132 Bologna (IT); Piciotti, Roberto, 40139 Bologna (IT)
(74) Representative: Maccagnan, Matteo

(56) References cited:
- EP-A- 1 338 503
- EP-A- 1 714 862
- WO-A-2008/010186
- WO-A2-2007/146927
- US-A1- 2005 023 067

## Description

### TECHNICAL FIELD

The present invention relates to a throttle control integrating an angular position sensor.

The present invention is advantageously applied to a motorcycle, to which explicit reference will be made in the following description without therefore loosing in generality.

### BACKGROUND ART

A conventional motorcycle comprises a throttle control (conventionally the grip placed on the right of the handlebar), which is rotationally mounted and mechanically connected to an engine control which adjusts driving torque generation. The throttle control is usually connected to the engine control by means of at least one metal Bowden-type wire, which is inserted into an external sheath to slide with respect to the sheath and is biased by a spring towards a rest position corresponding to zero driving torque.

Borrowing from the experience in the automotive industry, the application of DBW (Drive By Wire) systems has recently been suggested, in which the throttle control is no longer mechanically connected to the engine control, but is connected to a position sensor only, which detects the position of the throttle control, and therefore drives an actuator which mechanically operates the engine control.

The greatest issue that is to be faced when designing a DBW system adapted to be used on a motorcycle is the construction of an acquisition system for detecting the angular position of the throttle control. Indeed, such an acquisition system must be capable of rapidly and errorlessly interpreting the driver's intention to accelerate/decelerate, must provide information redundancy so as to ensure the interpretation of the driver's intention by an engine control unit, and must be installable in the context of a motorcycle taking into account the issues related to volumes, high vibrations which may occur on a motorcycle, and adverse environmental conditions related to the lack of protection (accidental shocks, very low or very high temperature, water sprays, etc.).

Furthermore, an acquisition system adapted to be used in a motorcycle must be highly versatile in order to be easily integrated even on very different motorcycles, because the production of motorcycles is highly fragmented and characterized by a wide production of models, often in small numbers.

In the automotive field, there are various solutions for constructing an acquisition system for detecting the gas pedal position; however, such automotive solutions may not be used on a motorcycle because they are too cumbersome and not strong enough. Furthermore, in motorcycle applications, the safety and rapidity of the interpretation of the driver's intentions is even more important than in automotive applications, because a car resting on four wheels is more firm per se, and thus a brief discrepancy between delivered driving torque and the driver's intention is tolerable (i.e. is substantially not dangerous); on the other hand, a motorcycle resting on two wheels only is unstable per se and is based on a dynamic balance which may be easily upset, even by a brief discrepancy between the delivered driving torque and the driver's intention (specifically in limit conditions, such as while cornering).

Patent application US2008154537A1 suggested an acquisition system for detecting the angular position of a motorcycle throttle control; the acquisition system is provided with: a fixed supporting body; a movable element, which is movably mounted to the supporting body; a transmission device mechanically connected to the throttle control and to the movable element to transmit the motion of the throttle control to the movable element ; a main position sensor, which is carried by the supporting body, is coupled to the movable element to determine the angular position of the movable element, and is adapted to provide two reciprocally redundant measurements of the angular position of the movable element; and a control position sensor, which is separate and independent from the main position sensor, is carried by the supporting body, is coupled to the movable element to determine the position of the movable element, and is adapted to provide two reciprocally redundant measurements of the position of the movable element.

The acquisition system described in patent application US2008154537A1 is very strong and reliable, but on the contrary has relatively large volumes and requires a mechanical connection by means of Bowden wires between the throttle control and the movable element mounted to the fixed supporting body.

Patent US6832511B2 describes an angular position sensor for detecting the angular position of a motorcycle throttle control; the position sensor is installed by the side of the throttle control and comprises a double potentiometer, which provides two reciprocally redundant measurements of the position of the movable element and is provided with a rotating shaft which is made angularly integral with the throttle control by means of a mechanical transmission device.

The angular position sensor described in patent US6832511B2 has the drawback of being not very reliable, because the use of a potentiometer arranged at one end of the handlebar is very problematic due to the high vibrations in this area; in other words, a potentiometer provides for a sliding contact between one or more movable sliders and a fixed plate, and such a sliding contact is very sensitive to mechanical vibrations. When normally running a motorcycle, the ends of the handlebar undergo very high vibrations due to the amplifying effect of the handlebar (i.e. a vibration transmitted to the handlebar at a central area for fastening the handlebar to the front fork is multiplied by the arms of the handlebar and is thus greatly amplified at the ends of the handlebar). Such vibrations may negatively affect the reading provided by the potentiometer, because they may cause undesired, uncontrolled oscillations of the position of the potentiometer sliders, which cause a high degree of uncertainty on the measurement provided by the potentiometer ; moreover, these vibrations may damage the potentiometer over time, thus determining early, unpredictable wear with potential negative impacts on the driver's safety.

Patent application WO2008010186A2 discloses a twist-grip control device for motor vehicle. The device comprises: a stator portion, a rotor portion which may be gripped and which is mounted such that it can be manually rotated about an axis with respect to the stator portion, against the action of an opposing spring, a first and a second permanent magnet connected to the rotor portion in respective separate angular fields about said axis and adapted to generate respective predetermined angular distributions of magnetic field intensity about said axis, first and second magnetic field sensors connected to the stator portion in respective separate angular positions about said axis), and associated with the first and second permanent magnets respectively in order to provide, when the rotor portion is rotated by a certain angle with respect to the stator portion, respective first and second electrical signals indicative of the relative angular position of the rotor portion; these signals are correlated with one another in a predetermined relationship such that one of the signals may be used as a control signal indicative of the extent of an associated controlled physical magnitude desired by the user, and the other signal may be used as a control signal adapted to enable the detection of the occurrence of operating malfunctions or failures when these signals are no longer correlated with one another in the predetermined relationship.

Patent application WO2007146927A2, according to the preamble of claim 1, discloses a vehicle power control according to the preamble of independent claim 1 and that includes a throttle mounting portion and a throttle that is movably mounted to the throttle mounting portion and configured for manipulation and operation by a rider. The power control also includes a sensor in contactless association with at least one of the throttle and throttle mounting portion; the sensor is configured for sensing a position of the throttle with respect to the mounting portion, in the contactless association, and generating a signal based on the sensed position for controlling motive power of a vehicle.

### DISCLOSURE OF INVENTION

It is the object of the present invention to provide a throttle control integrating an angular position sensor, which throttle control is free from the above-described drawbacks and specifically is easy and cost-effective to be implemented.

According to the present invention, a throttle control integrating an angular position sensor is provided as claimed in the appended claims.

### BRIEF DESCRIPTION OF THE DRAWINGS

The present invention will now be described with reference to the accompanying drawings, which show some non-limitative embodiments thereof, in which:
- figure 1 is a diagrammatic, perspective view, with parts removed for clarity, of a throttle control integrating an angular position sensor and made in accordance with the present invention;
- figure 2 is a diagrammatic, exploded, perspective view, with parts removed for clarity, of the throttle control in figure 1;
- figure 3 is a diagrammatic, longitudinal section view, with parts removed for clarity, of the throttle control in figure 1;
- figure 4 is a magnified view of a detail in figure 3;
- figure 5 is a diagrammatic, perspective view, with parts removed for clarity, of a different embodiment of the angular position sensor of the throttle control in figure 1;
- figure 6 is a diagrammatic, perspective view, with parts removed for clarity, of a further embodiment of the angular position sensor in figure 5;
- figure 7 is a diagrammatic, exploded, perspective view, with parts removed for clarity, of a different embodiment of a throttle control integrating an angular position sensor made in accordance with the present invention; and
- figure 8 is a diagrammatic, longitudinal section view, with parts removed for clarity, of a portion of the throttle control in figure 7.

### PREFERRED EMBODIMENTS OF THE INVENTION

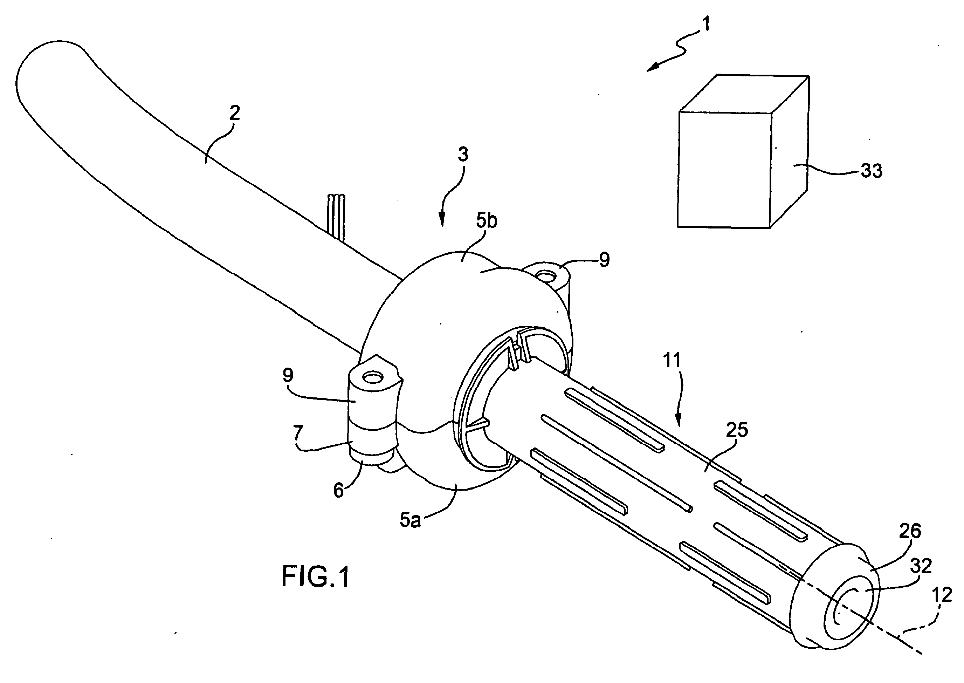

In figure 1, numeral 1 indicates as a whole a throttle control, which is mounted to a tubular handlebar 2 of a motorcycle.

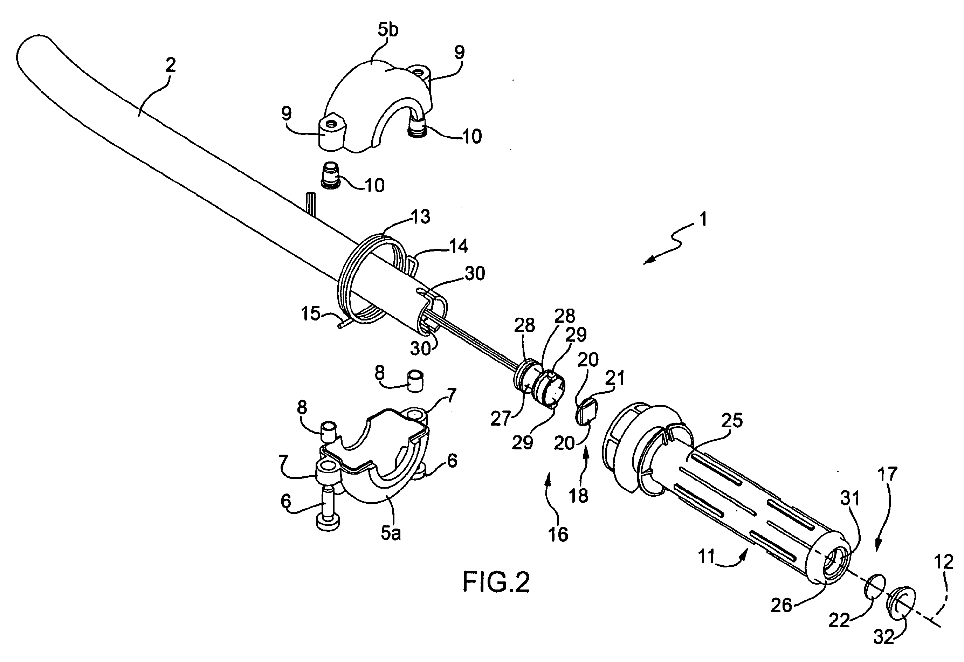

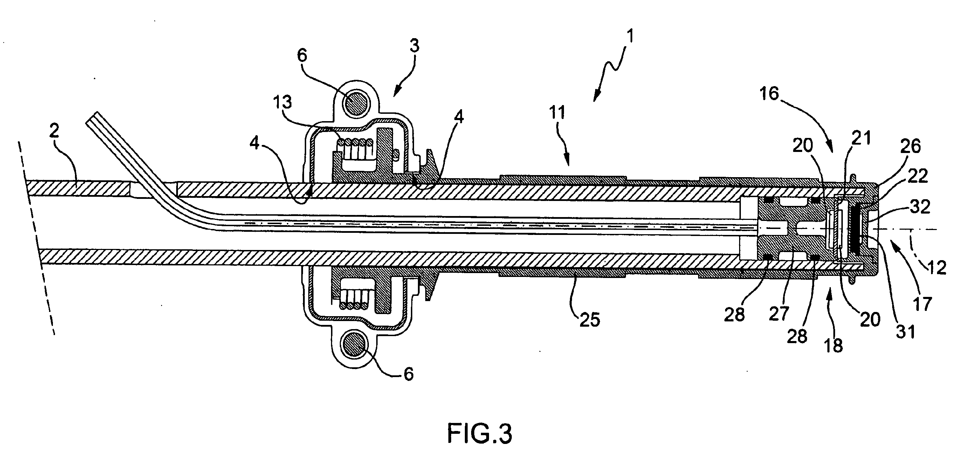

The throttle control 1 comprises a supporting body 3, which is shaped as an annular shell, is provided with a central through hole 4 (shown in figures 2 and 3) and is adapted to be fitted about the tubular handlebar 2 to be rigidly fixed to the tubular handlebar 2 . As shown in figure 2, the supporting body 3 is made of molded plastic material and consists of two halves 5 which are secured to each other about the tubular handlebar 2 and clamp onto the tubular handlebar 2 by means of a pair of screws 6. Specifically, one half 5a has two slots 7, which define two respective through holes which are covered by two respective metal bushings 8 and are engaged by the screws 6; the other half 5b has two slots 9, which are aligned with the slots 7 of half 5a, and define two respective blind holes which are covered by two respective threaded metal bushings 10 in which the screws 6 are screwed.

Furthermore, the throttle control 1 comprises a twist grip 11, which is tubular shaped, is rotationally carried by the supporting body 3 and is centrally perforated to be fitted about the tubular handlebar 2 in order to freely rotate with respect to the tubular handlebar 2 about a longitudinal rotation axis 12. The grip 11 is made of rigid plastic material by means of injection molding and serves a structural function; the grip 11 is covered by means of an external coating (not shown in the accompanying figures) made of plastic material which has both an appearance purpose and a functional purpose because it must ensure an optimal grip for the driver.

An elastic returning element 13 (specifically, a spiral spring) is arranged inside the supporting body 3, which has one end 14 coupled to the twist grip 11 and one end 15, opposite the end 14, secured to the supporting body 3; thereby, the elastic returning element 13 exerts an elastic bias on the grip 11, which tends to rotate the twist grip 11 towards a rest position corresponding to zero driving torque.

Finally, the throttle control 1 comprises an angular position sensor 16, which is adapted to read the angular position α of the twist grip 11 about the longitudinal rotation axis 12 for a DBW-type (Drive By Wire) control system.

The angular position sensor 16 comprises a rotor 17, which is supported by the twist grip 11 in order to rotate along with the twist grip 11 about the longitudinal rotation axis 12 and is capable of affecting an electric and/or magnetic field (either by modifying an existing electric and/or magnetic field, or by generating its own electric and/or magnetic field). Furthermore, the angular position sensor 16 comprises a reader 18, which is carried in a fixed position by the supporting body 3, is arranged close to the rotor 17, and is adapted to remotely and contactlessly read the orientation of the rotor 17 . According to a preferred embodiment, the reader 18 is adapted to read the orientation of the rotor 17 to provide three reciprocally redundant measurements of the angular position α of the throttle control 1.

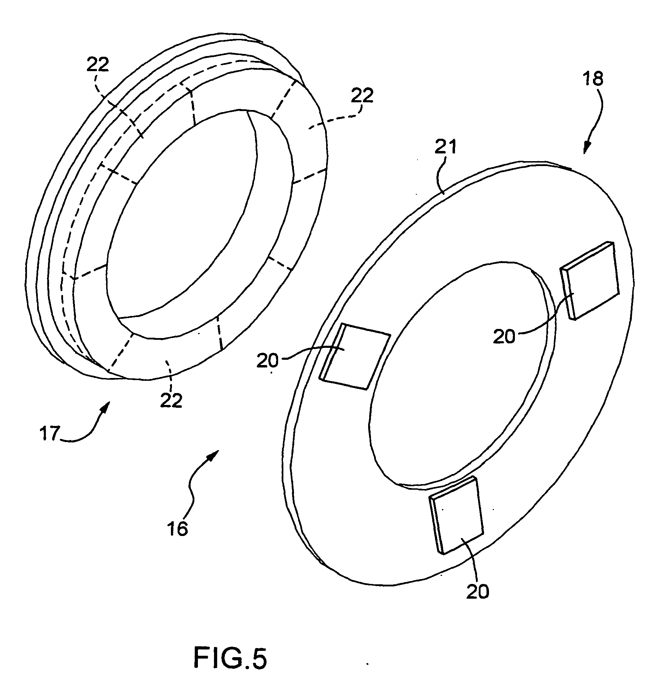

As shown in figures 2-8, the reader 18 comprises three electronic querying devices 20 (only two of which are shown in figures 2, 3 and 4), each of which is struck by a magnetic field generated by the rotor 17, and according to the intensity and/or direction of the magnetic field generated by the rotor 17, it reads the orientation of the rotor 17 . According to a preferred embodiment, the three electronic querying devices 20 are carried by a common printed circuit 21 arranged in a fixed position inside the tubular handlebar 2; the electronic querying devices 20 may be all fixed to a first surface of the printed circuit 21 facing the rotor 17 (as shown in figures 5-8), may all be fixed to a second surface of the printed circuit 21 opposite the first surface (according to a variant, not shown), or may be fixed to both the surfaces of the printed circuit 21 (as shown in figures 2, 3 and 4) so that the two electronic querying devices 20 are fixed to a first surface of the printed circuit 21 and the remaining electronic querying device 20 is fixed to a second surface of the printed circuit 21.

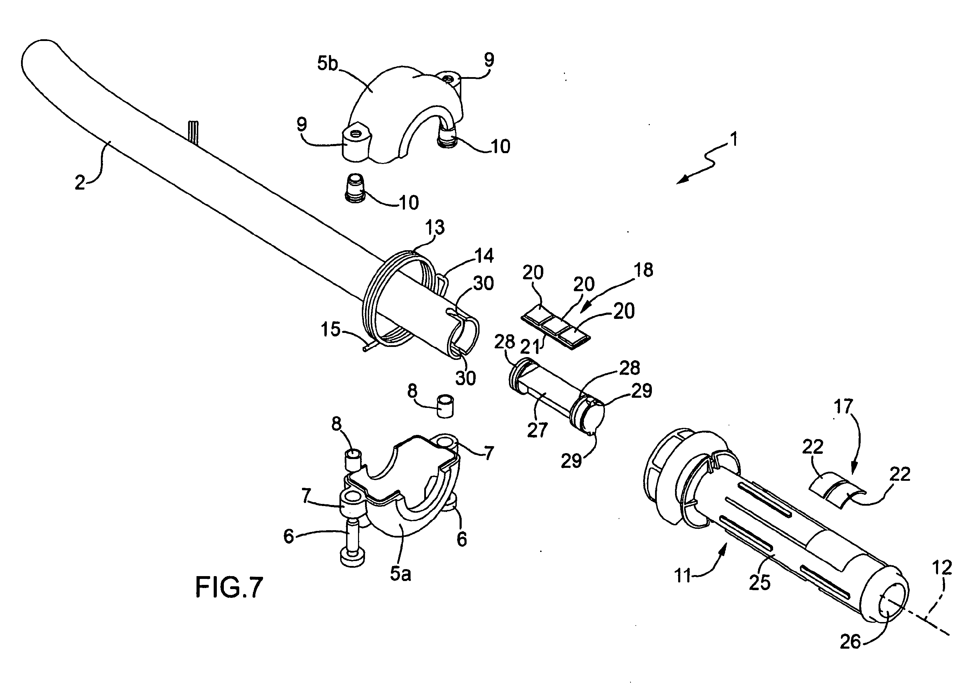

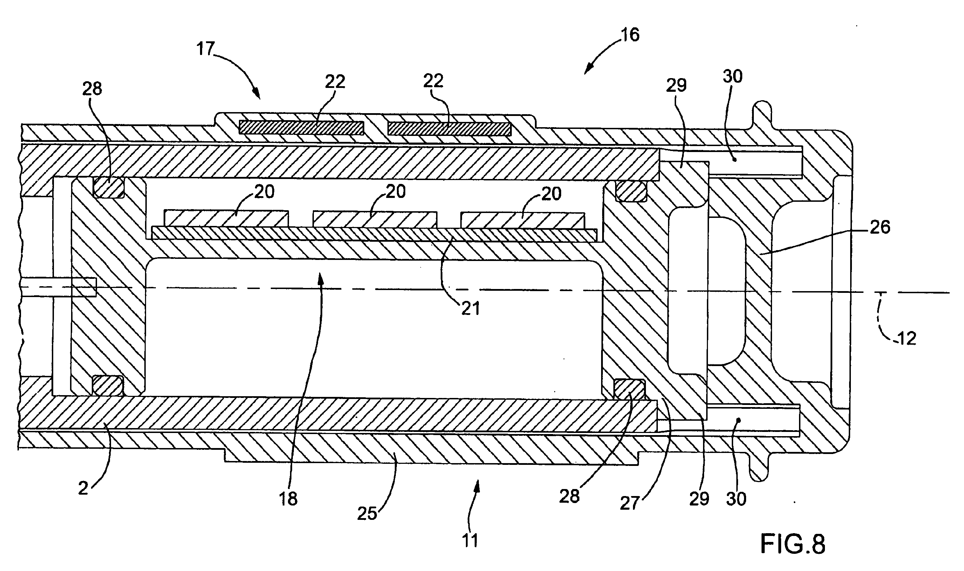

As shown in figures 2, 3 and 4, the rotor 17 comprises a single permanent magnet 22 which is read by the three electronic querying devices 20; in this case, the permanent magnet 22 preferably has a circular shape having two opposite poles (in other words, half the circular permanent magnet 22 is polarized as "North", while the other half of the circular permanent magnet 22 magnet is polarized as "South"). On the other hand, as shown in figures 7 and 8, the rotor 17 comprises two permanent magnets 22 which are read by the three electronic querying devices 20. According to a further variant (not shown), the rotor 17 comprises three permanent magnets 22, each of which is associated with a corresponding querying device 20. According to the alternative embodiment shown in figure 5, the rotor 17 comprises a plurality of permanent magnets 22 evenly distributed about the longitudinal rotation axis 12 to form a ring; according to variants (not shown), the permanent magnets 22 may be evenly distributed about the longitudinal rotation axis 12 to form either one ring arch or three reciprocally separated ring arches, each of which faces an respective electronic querying device 20. In other words, the rotor 17 may comprise either a same permanent magnet 22 (or a same group of permanent magnets 22) in common to all three electronic querying devices 20, or the rotor 17 may comprise a corresponding, dedicated permanent magnet 22 (or group of permanent magnets 22) for each electronic querying device 20.

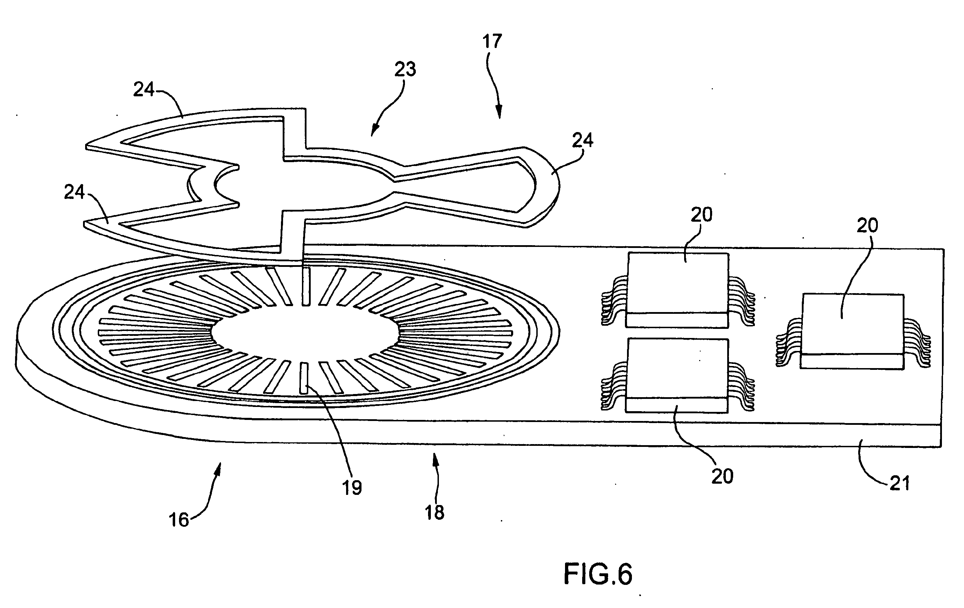

According to a different embodiment shown in figure 6, the rotor 17 comprises a closed turn 23 which is made of electrically conducting material and has a number of lobes 24 distributed about the longitudinal rotation axis 12 of the twist grip 11. In the embodiment shown in figure 6, the electronic querying devices 20 comprise a single common antenna 19 (typically at least one closed loop turn), which faces and is coupled to the turn 23 of the rotor 17 and is connected to the three electronic querying devices 20; in use, each electronic querying device 20 uses the antenna 19 to generate an electric field, which is reflected by the turn 23 of the rotor 17, and thus the electronic querying device 20 reads the electric field reflected by the turn 23 of the rotor 17. According to a different embodiment (not shown), each electronic querying device 20 comprises its own antenna 19, which is independent from the antennas 19 of the other electronic querying devices 20; in the latter embodiment, the antennas 19 are generally concentric to one another and are arranged one inside the other. The antenna 19 is again obtained on a first surface of the printed circuit 21 facing the rotor 17, while the electronic querying device 20 either may be fixed to the first surface (as shown in figure 8) of the printed circuit 21, or may be fixed to a second surface of the printed circuit 21 opposite the first surface.

It is worth noting that in the angular position sensor 18, the active components (and thus the most delicate components potentially prone to faults or malfunctions) are the electronic querying devices 20, while all the other components (antenna 19, permanent magnets 22, turn 23, printed circuit 21) are passive and very unlikely to be prone to faults or malfunctions unless they are subjected to exceptional mechanical stresses (i.e. to violent crashes due to falling of the motorcycle); therefore, in order to contain costs and volumes without appreciable reductions of reliability it has been chosen to triplicate only the electronic querying devices 20 (alternatively, only the electronic querying devices 20 could be duplicated, i.e. it would be possible to use two electronic querying devices 20 only instead of three electronic querying devices 20).

As shown in figures 2, 3 and 4, the twist grip 11 comprises a cylindrical side wall 25 arranged about the tubular handlebar 2 and a circular end wall 26, which is arranged outside the tubular handlebar 2 to close one end of the tubular handlebar 2 . In the embodiment shown in figures 2, 3 and 4, the rotor 17 is carried by the circular end wall 26 of the twist grip 11; on the other hand, in the embodiment shown in figures 5 and 6, the rotor 17 is carried by the cylindrical side wall 25 of the twist grip 11.

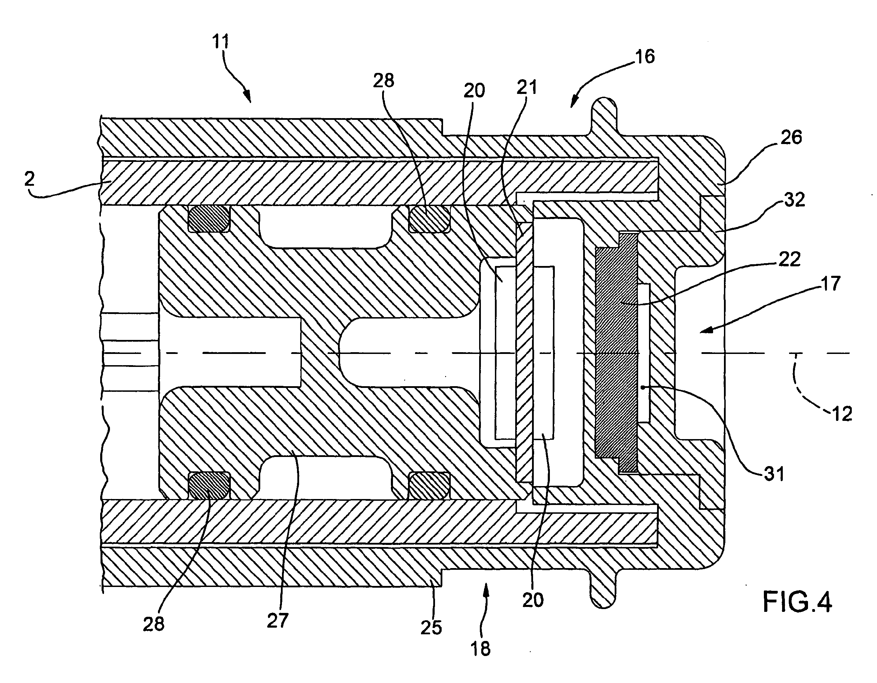

According to a preferred embodiment, the angular position sensor 16 comprises a supporting body 27, which has a cylindrical shape, is adapted to be inserted and fixed into the tubular handlebar 2 and accommodates the reader 18. As shown in figures 3 and 4, the supporting body 27 comprises a pair of elastic gaskets 28 which serve the function of keeping the supporting body 27 blocked inside the tubular handlebar 2 while allowing to compensate for manufacturing tolerances; in other words, the supporting body 27 is fixed into the tubular handlebar 2 by interference fitting of the elastic gaskets 28 which are radially compressed inside the tubular handlebar 2 .

According to a preferred embodiment, the supporting body 27 comprises a coupling element which determines a univocal, predetermined angular position of the supporting body 27 inside the tubular handlebar 2. The coupling element comprises a pair of pins 29 which radially rise from the supporting body 27 and are arranged opposite to each other; each pin 29 is adapted to engage a corresponding seat 30 (specifically, a through slot) obtained in the tubular handlebar 2.

In the embodiment shown in figures 1-4, at the end wall 26, the twist grip 11 has a seat 31, which accommodates the rotor 17 and is closed by a screwed lid 32. In the embodiments shown in figures 5-8, the twist grip 11 is made of plastic material by molding, and the rotor 17 is co-molded to the twist grip 11 in order to be integrated into the twist grip 11 .

In the embodiments shown in figures 1-6, the rotor 17 is fixed to the circular end wall 26 of the twist grip 11 and is thus arranged at an open end of the tubular handlebar 2; therefore, the metal of the tubular handlebar 2 is not interposed between the rotor 17 and the reader 18. On the contrary, in the embodiment shown in figures 7 and 8, the rotor 17 is fixed to the cylindrical side wall 25 of the twist grip 11 and is thus arranged approximately in the middle of the twist grip 11 over the tubular handlebar 2; therefore, the metal of the tubular handlebar 2 is interposed between the rotor 17 and the reader 18. In this embodiment, when the rotor 17 comprises permanent magnets 22, the tubular handlebar 2 is to be made of non-magnetic metal (preferably aluminium) to avoid the magnetic field generated by the permanent magnets 22 from being shielded; alternatively, the tubular handlebar 2 comprises a through window obtained at the rotor 17.

The three electronic querying devices 20 of the position sensor 16 provide three reciprocally redundant measurements of the angular position α of the twist grip 11; such measurements are supplied to a processing unit 33, which uses the measurements themselves for determining the angular position α of the twist grip 11 (i.e. of the throttle control 1) with a high degree of safety. Specifically, the processing unit 33 uses one of the three available measurements for determining the angular position α of the twist grip 11, while it uses all three available measurements for verifying the correct operation of the three electronic querying devices 20 of the position sensor 16, i.e. for verifying and validating the angular position α of the twist grip 11. In other words, the processing unit 33 uses the crossed comparison between the three available measurements for diagnosing possible malfunctions of the three electronic querying devices 20 of the position sensor 16 and determines the angular position α of the throttle control 1 by using at least one measurement provided by a correctly operating reader 18.

The processing unit 33 uses the angular position α of the twist grip 11 (i.e. of the throttle control 1) to supervise the operation of a motorcycle engine, and uses the angular position α of the twist grip 11 to adjust driving torque generation.

Generally, two electronic querying devices 20 provide two measurements of the actual angular position α of the twist grip 11 having complementary values so that the sum of the two measurements is always constant, while a third reader could provide an indication whether the twist grip 11 is in a given position or not (generally in the rest position corresponding to zero driving torque), i.e. could provide a true or false type indication. The angular rest position α is the most important because the greatest danger in case of malfunction of a DBW system is not realizing that the driver requires to cancel the driving torque generation, and thus accelerating the motorcycle in spite of the driver's intention.

The above-described throttle control 1 has many advantages, because it is simple and cost-effective to be implemented, highly flexible because it may be easily installed in any type of motorcycle, and is structurally very similar to a throttle control of conventional type, thus reducing the investments needed for its implementation.

Furthermore, the above-descried throttle control 1 ensures a standard solution for a motorcycle DBW system and integrates all "gas demand" functions and all the redundancies required for safety in a single object.

The above-described throttle control 1 allows to obtain an accurate and, above all, very reliable measurement of the angular position α of the twist grip 11 and, even in the event of failure limited to the position sensor 16, allows to run the motorcycle under high safety conditions.

Finally, but not least importantly, the above-described throttle control 1 is highly reliable, because the angular position sensor 16 is not affected at all by the existing high vibrations, as it does not include a mechanical connection between the rotor 17 and the reader 18. In other words, when normally running a motorcycle, the ends of the handlebar 2 undergo very high vibrations due to the amplifying effect of the handlebar 2 (i.e. a vibration transmitted to the handlebar 2 at a central area for fastening the handlebar 2 to the front fork is multiplied by the arms of the handlebar 2 and thus is greatly amplified at the ends of the handlebar 2); such vibrations do not negatively affect the reading provided by the angular position sensor 16, because no mechanical connection between the rotor 17 and the reader 18 is provided. Furthermore, given the contactless nature of the position sensor 16 employed, no mechanical wear phenomena occur over time which may determine malfunctions with consequent negative impacts on driver's safety.

## Claims

1. A throttle control (1) integrating an angular position sensor (16); the throttle control (1) comprises:
a twist grip (11), which has a tubular shape and is centrally perforated to be fitted about a tubular handlebar (2) so as to rotate with respect to the tubular handlebar (2); and
an angular position sensor (16), which is adapted to read the angular position of the twist grip (11) and comprises at least one rotor (17), which is supported by the twist grip (11) to rotate along with the twist grip (11) and is adapted to affect an electric and/or magnetic field, and at least one reader (18), which is mounted in a fixed position so as to be arranged close to the rotor (17), is adapted to remotely and contactlessly read the orientation of the rotor (17) and is adapted to be mounted in a fixed position inside the tubular handlebar (2) so as to be arranged close to the rotor (17);
the throttle control (1) is **characterized in that** the reader (18) of the angular position sensor (16) comprises at least two electronic querying devices (20), which are reciprocally independent and are adapted to read the orientation of the rotor (17) to provide at least two reciprocally redundant measurements.

2. A throttle control (1) according to claim 1, wherein the twist grip (11) comprises a cylindrical side wall (25) arranged about the tubular handlebar (2) and a circular end wall (26), which is arranged outside the tubular handlebar (2) to close one end of the tubular handlebar (2) ; the rotor (17) is carried by the circular end wall (26) of the twist grip (11).

3. A throttle control (1) according to claim 2, wherein at the circular end wall (26), the twist grip (11) has a seat (31) which accommodates the rotor (17) and is closed by a lid (32).

4. A throttle control (1) according to claim 1, wherein the twist grip (11) comprises a cylindrical side wall (25) arranged about the tubular handlebar (2) and a circular end wall (26), which is arranged outside the tubular handlebar (2) to close one end of the tubular handlebar (2) ; the rotor (17) is carried by the cylindrical side wall (25) of the twist grip (11).

5. A twist grip (1) according to claim 4, wherein the tubular handlebar (2) is made of non-magnetic metal.

6. A twist grip (1) according to claim 4, wherein the tubular handlebar (2) comprises a through window obtained at the rotor (17).

7. A throttle control (1) according to one of the claims from 1 to 6, wherein the reader (18) of the angular position sensor (16) comprises a common printed circuit (21) arranged in a fixed position and supporting the at least two electronic querying devices (20) which are fixed to both the surfaces of the printed circuit (21), so that an electronic querying device (20) is fixed to a first surface of the printed circuit (21) and the other electronic querying device (20) is fixed to a second surface of the printed circuit (21).

8. A throttle control (1) according to claim 7, wherein the reader (18) of the angular position sensor (16) comprises three electronic querying devices (20), which are reciprocally independent, are adapted to read the orientation of the rotor (17) to provide at least two reciprocally redundant measurements and are fixed to both the surfaces of the printed circuit (21), so that the two electronic querying devices (20) are fixed to a first surface of the printed circuit (21) and the remaining electronic querying device (20) is fixed to a second surface of the printed circuit (21).

9. A throttle control (1) according to claim 8, wherein the rotor (17) of the angular position sensor (16) comprises two electromagnetic elements (22; 23), the orientation of which is read by the three electronic querying devices (20).

10. A throttle control (1) according to one of the claims from 1 to 9, wherein the rotor (17) of the angular position sensor (16) comprises a single electromagnetic element (22; 23), the orientation of which is read by the electronic querying devices (20).

11. A throttle control (1) according to one of the claims from 1 to 9, wherein the rotor (17) of the angular position sensor (16) comprises at least two electromagnetic elements (22; 23), each of which is associated with a corresponding electronic querying device (20).

12. A throttle control (1) according to one of the claims from 1 to 11, wherein the rotor (17) comprises at least one permanent magnet (22).

13. A throttle control (1) according to one of the claims from 1 to 12, wherein the angular position sensor (16) comprises a first supporting body (27), which has a cylindrical shape, is adapted to be inserted and fixed into the tubular handlebar (2) and accommodates the reader (18).

14. A throttle control (1) according to claim 13, wherein the first supporting body (27) comprises a coupling element which determines a univocal, predetermined angular position of the first supporting body (27) inside the tubular handlebar (2).

15. A throttle control (1) according to claim 14, wherein the coupling element comprises at least one pin (29) which radially rises from the first supporting body (27) and is adapted to engage a corresponding seat (30) obtained in the tubular handlebar (2).

16. A throttle control (1) according to one of the claims from 1 to 15, wherein the twist grip (11) is made of plastic material by molding and the rotor (17) is co-molded to the twist grip (11) in order to be integrated into the twist grip (11).

17. A throttle control (1) according to one of the claims from 1 to 16 and comprising:
a supporting body (3), which is provided with a central through hole and is adapted to be fitted about the handlebar (2) to be rigidly fixed to the handlebar (2); and
at least one elastic returning element (13), which is arranged inside the supporting body (3) and has a first end (15) coupled to the twist grip (11) and a second end (16) secured to the supporting body (3) to exert an elastic bias on the twist grip (11) which tends to rotate the twist grip (11) towards a rest position corresponding to zero driving torque.

## Patentansprüche

1. Drosselklappensteuerung (1) mit einem Winkelpositionssensor (16); die Drosselklappensteuerung (1) weist auf:
einen Drehhandgriff (11), der eine rohrartige Form hat und für die Anbringung um eine rohrförmige Lenkstange (2) herum mittig durchbohrt ist, um in Bezug auf die rohrförmige Lenkstange (2) zu drehen; und
einen Winkelpositionssensor (16), der angepasst ist, die Winkelposition des Drehhandgriffs (11) zu erfassen, und mindestens einen Rotor (17), der vom Drehhandgriff (11) gehalten wird, um zusammen mit dem Drehhandgriff (11) zu drehen, und angepasst ist, ein elektrisches und/oder magnetisches Feld zu beeinflussen, und mindestens einen Leser (18) aufweist, der in einer fixierten Position montiert ist, um nahe dem Rotor (17) angeordnet zu sein, angepasst ist, die Orientierung des Rotors (17) aus einer Entfernung und berührungslos zu erfassen, und angepasst ist, in einer fixierten Stellung innerhalb der rohrförmigen Lenkstange (2) montiert zu werden, um nahe dem Rotor (17) angeordnet zu sein;
die Drosselklappensteuerung (1) ist **dadurch gekennzeichnet, dass** der Leser (18) des Winkelpositionssensors (16) mindestens zwei elektronische Abfragevorrichtungen (20) aufweist, die voneinander unabhängig sind und die angepasst sind, die Orientierung des Rotors (17) zu erfassen, um mindestens zwei zueinander redundante Messungen bereitzustellen.

2. Drosselklappensteuerung (1) nach Anspruch 1, wobei der Drehhandgriff (11) eine um die rohrförmige Lenkstange (2) herum angeordnete, zylindrische Seitenwand (25) und eine kreisförmige Abschlusswand (26), die außerhalb der rohrförmigen Lenkstange (2) angeordnet ist, um ein Ende der rohrförmigen Lenkstange (2) zu verschließen, aufweist; der Rotor (17) wird von der kreisförmigen Abschlusswand (26) des Drehhandgriffs (11) getragen.

3. Drosselklappensteuerung (1) nach Anspruch 2, wobei an der kreisförmigen Abschlusswand (26) der Drehhandgriff (11) einen Sitz (31) hat, der den Rotor (17) aufnimmt und durch einen Deckel (32) verschlossen wird.

4. Drosselklappensteuerung (1) nach Anspruch 1, wobei der Drehhandgriff (11) eine um die rohrförmige Lenkstange (2) herum angeordnete, zylindrische Seitenwand (25) und eine kreisförmige Abschlusswand (26), die außerhalb der rohrförmigen Lenkstange (2) angeordnet ist, um ein Ende der rohrförmigen Lenkstange (2) zu verschließen, aufweist; der Rotor (17) wird von der zylindrischen Seitenwand (25) des Drehhandgriffs (11) getragen.

5. Drehhandgriff (1) nach Anspruch 4, wobei die rohrförmige Lenkstange (2) aus nichtmagnetischem Metall hergestellt ist.

6. Drehhandgriff (1) nach Anspruch 4, wobei die rohrförmige Lenkstange (2) ein am Rotor (17) erhaltenes Durchgangsfenster aufweist.

7. Drosselklappensteuerung (1) nach einem der Ansprüche 1 bis 6, wobei der Leser (18) des Winkelpositionssensors (16) eine gewöhnliche gedruckte Schaltung (21), welche in einer fixierten Position angeordnet ist und die mindestens zwei an den beiden Oberflächen der gedruckten Schaltung (21) fixierten, elektronischen Abfragevorrichtungen (20) hält, aufweist, sodass eine elektronische Abfragevorrichtung (20) an einer ersten Oberfläche der gedruckten Schaltung (21) fixiert ist und die andere elektronische Abfragevorrichtung (20) an einer zweiten Oberfläche der gedruckten Schaltung (21) fixiert ist.

8. Drosselklappensteuerung (1) nach Anspruch 7, wobei der Leser (18) des Winkelpositionssensors (16) drei elektronische Abfragevorrichtungen (20), die voneinander unabhängig sind, die angepasst sind, die Orientierung des Rotors (17) zu erfassen, um mindestens zwei zueinander redundante Messungen bereitzustellen, und die an den beiden Oberflächen der gedruckten Schaltung (21) fixiert sind, aufweist, sodass die zwei elektronischen Abfragevorrichtungen (20) an einer ersten Oberfläche der gedruckten Schaltung (21) fixiert sind und die verbleibende elektronische Abfragevorrichtung (20) an einer zweiten Oberfläche der gedruckten Schaltung (21) fixiert ist.

9. Drosselklappensteuerung (1) nach Anspruch 8, wobei der Rotor (17) des Winkelpositionssensors (16) zwei elektromagnetische Elemente (22; 23) aufweist, deren Orientierung von den drei elektronischen Abfragevorrichtungen (20) erfasst wird.

10. Drosselklappensteuerung (1) nach einem der Ansprüche 1 bis 9, wobei der Rotor (17) des Winkelpositionssensors (16) ein einziges elektromagnetisches Element (22; 23) aufweist, dessen Orientierung von den elektronischen Abfragevorrichtungen (20) erfasst wird.

11. Drosselklappensteuerung (1) nach einem der Ansprüche 1 bis 9, wobei der Rotor (17) des Winkelpositionssensors (16) mindestens zwei elektromagnetische Elemente (22; 23) aufweist, die jeweils mit einer entsprechenden elektronischen Abfragevorrichtung (20) verbunden sind.

12. Drosselklappensteuerung (1) nach einem der Ansprüche 1 bis 11, wobei der Rotor (17) mindestens einen Dauermagneten (22) aufweist.

13. Drosselklappensteuerung (1) nach einem der Ansprüche 1 bis 12, wobei der Winkelpositionssensor (16) einen ersten haltenden Körper (27), der eine zylindrische Form hat, der angepasst ist, in die rohrförmige Lenkstange (2) gesteckt und darin fixiert zu werden, und der den Leser (18) aufnimmt, aufweist.

14. Drosselklappensteuerung (1) nach Anspruch 13, wobei der erste haltende Körper (27) ein Kupplungselement, das eine eindeutige, vorgegebene Winkelposition des ersten haltenden Körpers (27) innerhalb der rohrförmigen Lenkstange (2) bestimmt, aufweist.

15. Drosselklappensteuerung (1) nach Anspruch 14, wobei das Kupplungselement mindestens einen Stift (29), der sich radial vom ersten haltenden Körper (27) erhebt und angepasst ist, einen entsprechenden, in der rohrförmigen Lenkstange (2) erhaltenen Sitz (30) zu ergreifen, aufweist.

16. Drosselklappensteuerung (1) nach einem der Ansprüche 1 bis 15, wobei der Drehhandgriff (11) aus Kunststoffmaterial durch Pressverarbeitung hergestellt ist und der Rotor (17) durch Verbundpressen mit dem Drehhandgriff (11) hergestellt ist, um in den Drehhandgriff (11) integriert zu werden.

17. Drosselklappensteuerung (1) nach einem der Ansprüche 1 bis 16, die aufweist:
einen haltenden Körper (3), der mit einem mittigen Durchgangsloch versehen ist und angepasst ist, um die Lenkstange (2) herum zur starren Fixierung an der Lenkstange (2) angebracht zu werden; und
mindestens ein elastisches Rückstellelement (13), das innerhalb des haltenden Körpers (3) angeordnet ist und ein an den Drehhandgriff (11) gekoppeltes erstes Ende (15) und ein am haltenden Körper (3) angebrachtes zweites Ende (16) besitzt, um auf den Drehhandgriff (11) eine elastische Vorspannung auszuüben, die bestrebt ist, den Drehhandgriff (11) in Richtung einer Ruheposition, die einem Nullantriebsmoment entspricht, zu drehen.

## Revendications

1. Commande des gaz (1) comprenant un capteur de position angulaire (16) ; la commande des gaz (1) comprenant :
une poignée tournante (11) qui présente une forme tubulaire et est forée au centre pour se monter autour d'un guidon tubulaire (2) de manière à tourner par rapport au guidon tubulaire (2) ; et
un capteur de position angulaire (16) qui est apte à lire la position angulaire de la poignée tournante (11) et qui comprend au moins un rotor (17) qui est supporté par la poignée tournante (11) pour tourner avec la poignée tournante (11) et est apte à influer sur un champ électrique et/ou magnétique, et au moins un lecteur (18) qui est monté dans une position fixe de manière à être placé près du rotor (17), est apte à lire l'orientation du rotor (17) à distance et sans contact et apte à être monté dans une position fixe à l'intérieur du guidon tubulaire (2) de manière à être placé près du rotor (17) ;
la commande des gaz (1) étant **caractérisée en ce que** le lecteur (18) du capteur de position angulaire (16) comprend au moins deux dispositifs interrogateurs électroniques (20) qui sont indépendants l'un de l'autre et sont aptes à lire l'orientation du rotor (17) pour produire au moins deux mesures redondantes l'une par rapport à l'autre.

2. Commande des gaz (1) selon la revendication 1, dans laquelle la poignée tournante (11) comprend une paroi latérale cylindrique (25) disposée autour du guidon tubulaire (2) et une paroi terminale circulaire (26) qui est disposée à l'extérieur du guidon tubulaire (2) pour fermer une extrémité du guidon tubulaire (2) ; le rotor (17) est porté par la paroi terminale circulaire (26) de la poignée tournante (11).

3. Commande des gaz (1) selon la revendication 2, dans laquelle, au droit de la paroi terminale circulaire (26), la poignée tournante (11) présente un logement (31) qui reçoit le rotor (17) et qui est fermé par un opercule (32).

4. Commande des gaz (1) selon la revendication 1, dans laquelle la poignée tournante (11) comprend une paroi latérale cylindrique (25) disposée autour du guidon tubulaire (2) et une paroi terminale circulaire (26) qui est disposée à l'extérieur du guidon tubulaire (2) pour fermer une extrémité du guidon tubulaire (2) ; le rotor (17) est porté par la paroi latérale cylindrique (25) de la poignée tournante (11)

5. Poignée tournante (1) selon la revendication 4, dans laquelle le guidon tubulaire (2) est fait de métal non magnétique.

6. Poignée tournante selon la revendication 4, dans lequel le guidon tubulaire (2) présente une fenêtre débouchante ménagée au niveau du rotor (17).

7. Commande des gaz (1) selon une des revendications 1 à 6, dans laquelle le lecteur (18) du capteur de position angulaire (16) comprend un circuit imprimé commun (21) disposé dans une position fixe et qui supporte les au moins deux dispositifs interrogateurs électroniques (20) qui sont fixées aux deux surfaces du circuit imprimé (21), de telle sorte qu'un dispositif interrogateur électronique (20) est fixé à une première surface du circuit imprimé (21) et que l'autre dispositif interrogateur électronique (20) est fixé à une seconde surface du circuit imprimé (21).

8. Commande des gaz (1) selon la revendication 7, dans laquelle le lecteur (18) du capteur de position angulaire (16) comprend trois dispositifs interrogateurs électroniques (20) qui sont indépendants les uns des autres, qui sont aptes à lire l'orientation du rotor (17) pour produire au moins deux mesures indépendantes l'une de l'autre, et qui sont fixés aux deux surfaces du circuit imprimé (21), de telle manière que les deux dispositifs interrogateurs électroniques (20) sont fixés à une première surface du circuit imprimé (21) et que le dispositif interrogateur électronique restant (20) soit fixé à une seconde surface du circuit imprimé (21).

9. Commande des gaz (1) selon la revendication 8, dans laquelle le rotor (17) du capteur de position angulaire (16) comprend deux éléments électromagnétiques (22 ; 23) dont l'orientation est lue par les trois dispositifs interrogateurs électroniques (20).

10. Commande des gaz (1) selon une des revendications 1 à 9, dans laquelle le rotor (17) du capteur de position angulaire (16) comprend un seul élément électromagnétique (22 ; 23) dont l'orientation est lue par les dispositifs interrogateurs électroniques (20).

11. Commande électronique (1) selon une des revendications 1 à 9, dans laquelle le rotor (17) du capteur de position angulaire (16) comprend au moins deux éléments électromagnétiques (22 ; 23) dont chacun est associé à un dispositif interrogateur électronique correspondant (20)

12. Commande des gaz (1) selon une des revendications 1 à 11, dans laquelle le rotor (17) comprend au moins un aimant permanent (22).

13. Commande des gaz (1) selon une des revendications 1 à 12, dans laquelle le capteur de position angulaire (16) comprend un premier corps support (27) qui a une forme cylindrique, qui est apte à être inséré et fixé dans le guidon tubulaire (2) et qui reçoit le lecteur (18).

14. Commande des gaz (1) selon la revendication 13, dans laquelle le premier corps support (27) comprend un élément d'accouplement qui détermine une position angulaire univoque prédéterminée du premier corps support (27) à l'intérieur du guidon tubulaire (2),

15. Commande des gaz (1) selon la revendication 14, dans laquelle l'élément d'accouplement comprend au moins un ergot (29) qui fait saillie radialement sur le premier corps support (27) et est apte à coopérer avec un logement correspondant (30) ménagé dans le guidon tubulaire (2).

16. Commande des gaz (1) selon une des revendications 1 à 15, dans laquelle la poignée tournante (11) est faite de matière plastique par moulage et le rotor (17) est co-moulé avec la poignée tournante (11) de manière à être intégré dans la poignée tournante (11).

17. Commande des gaz (1) selon une des revendications 1 à 16 et comprenant
un corps support (3) qui est muni d'un trou débouchant central et est apte à être monté autour du guidon (2) de manière à être fixé rigidement ou guidon (2) ; et
au moins un élément de rappel élastique (13) qui est disposé à l'intérieur du corps support (3), qui présente une première extrémité (15) couplée à la poignée tournante (11) et une seconde extrémité (16) fixée au corps support (3) pour exercer une sollicitation élastique sur la poignée tournante (11), et qui tend à faire tourner la poignée tournante (11) en direction d'une position de repos qui correspond à la position de couple d'entraînement nul.
